# EUROPEAN PATENT APPLICATION

(11) **EP 1 217 769 A1**
(43) Date of publication of application: **26.06.2002**
(21) Application number: 01955640.6
(22) Date of filing: 09.08.2001
(51) Int. Cl.: H04H 1/00, H04N 7/173, H04N 5/76

(54) **DATA TRANSFER METHOD AND MOBILE SERVER**

(30) Priority: 10.08.2000 JP 2000243107
(71) Applicant: NTT DoCoMo, Inc., Tokyo 100-6150 (JP)
(72) Inventor: NAGAOKA, Tatsuji, Sapporo-shi, Hokkaido 002-8072 (JP); YONEKURA, Toshinori, Warabi-shi, Saitama 335-0005 (JP); NOMURA, kazuo, Ota-ku, Tokyo 146-0083 (JP); HIRUMA, Yutaka, Nerima-ku, Tokyo 176-0001 (JP)
(74) Representative: HOFFMANN - EITLE
(86) International application number: JP0106878
(87) International publication number: WO0215447

(57) **Abstract**

A mobile broadcast MB is multiplexed with a general broadcast GB and sent from a broadcasting station 1. The mobile broadcast MB is received by a mobile server 5. The received mobile broadcast MB is converted by the mobile server 5 into data reproducible by a portable terminal 7. The converted data is forwarded to the portable terminal 7 from the mobile server 5 via a mobile communications network 6. The forwarded data is reproduced and displayed on a display screen 7b.

## Description

### TECHNICAL FIELD

The present invention relates to a mobile server for receiving mobile broadcasts on behalf of a portable terminal and forwarding those mobile broadcasts to the portable terminal, and a data forwarding method for the same.

### BACKGROUND ART

In recent years progress has been made in digitizing broadcasts, while. on the other hand the use of portable telephones has become remarkably widespread. This suggests that there is a possibility for the merging of broadcasting and communications, and much attention has been given to the potential that portable telephones have in serving as communication terminals with functions other than that of voice transmission. This means that it is conceivable that portable terminals such as portable telephones could be utilized as receiver terminals for digital broadcasts. However, in this context problems like the following can be anticipated. One such problem is that the portable terminal must be equipped with a relatively large receiver when an attempt is made to use that portable terminal to directly receive mobile broadcasts which are intended for portable terminals and broadcast from a broadcasting station, and thus portable terminals become large and lose their portability, and manufacturing costs are increased. Furthermore, even if a portable terminal includes the function of receiving mobile broadcasts, for example, due geographic conditions and the like, the portable terminal will not necessarily be able to always receive broadcasts from a broadcasting station.

### DISCLOSURE OF THE INVENTION

In view of the above circumstances, it is an object of this invention to enable the reception of mobile broadcasts with a portable terminal without an increase in the size of the portable terminal or increased manufacturing costs and furthermore not susceptible to geographical factors, and to provide a method for forwarding broadcast data from a broadcasting station to the portable terminal and a mobile server for forwarding these data.

To solve the above problems, in the present invention a mobile server accommodated on a mobile communications network is provided, and this mobile server receives data, which are intended for a mobile terminal accommodated on the mobile communications network, from a broadcasting station and forwards the received data to that portable terminal via the mobile communications network. Thus, the mobile server is made to act as proxy for the reception of the broadcast, which enables the broadcast to be received by the portable terminal.

Moreover, if the mobile server converts the broadcast data received from the broadcasting station into a format that can be reproduced by the portable terminal to which it is forwarded, and then sends the converted data to that mobile terminal, then the reception of a broadcast corresponding to the feature of the portable terminal is possible.

Furthermore, it is also possible that firstly the mobile server receives a two-way program that is broadcast by the broadcasting station and sends the two-way program to the portable terminal, secondly the portable terminal sends, via a mobile communications network, the reaction of the user of the portable terminal to the received two-way program to a two-way server which is provided between the broadcasting station and the portable terminal, finally the two-way server receives the reaction of the user that is sent, and sends that received reaction to the broadcasting station. Thus, the user of the portable terminal is able to participate in a two-way program.

In another preferable embodiment, program selection information that is used when selecting a program broadcast from the broadcasting station is received by the mobile server; the mobile server forwards the received program selection information to the portable terminal; the portable terminal sends a program record command for a program selected by the user of that portable terminal, based on the received program information, to a home server installed in a household, for example, and provided with a function for recording the broadcast program; and the home server records the selected program in accordance with the received program record command. Thus, it is possible for the user when away from the home to make the home server in their home record a desired program, and to view the program after returning home.

In a further preferable embodiment, the portable terminal makes a request to the mobile server to reserve a broadcast program for recording; the mobile server receives and records the program which has been reserved, and in response to a program reproduction command from the portable terminal, forwards the recorded program from the mobile server to the portable terminal. Thus, a user of the portable terminal, even when away from the home, can view a reserved program with the portable terminal. Moreover, the user is able to view programs stored in the mobile server, which have already been broadcast.

### BRIEF DESCRIPTION OF THE DRAWINGS

Fig. 1 is a block diagram showing an example of the overall configuration of the first embodiment.
Fig. 2 is a block diagram showing an example of the internal configuration of the mobile server 5.
Fig. 3 is a flow chart illustrating an example of the operation continually performed by the mobile server 5.
Fig. 4 is a sequence diagram illustrating an example of the operation of the portable terminal 7 and the mobile server 5 when the portable terminal 7 accesses the mobile server 5.
Fig. 5 is a block diagram illustrating an example of the overall configuration of the second embodiment.
Fig. 6 is a block diagram showing an example of the internal configuration of the TMS server 8.
Fig. 7 is a block diagram showing an example of the internal configuration of the broadcasting station 1.
Fig. 8 is a diagram showing an example of the voting form DB 1h.
Fig. 9 is a sequence diagram showing an example of the operation of the second embodiment.
Fig. 10 is a block diagram showing an example of the overall configuration of the third embodiment.
Fig. 11 is a block diagram illustrating an example of the home bus system in which the home server 13 is used.
Fig. 12 is a sequence diagram showing an example of the operation of the third embodiment.
Fig. 13 is a block diagram showing an example of the overall configuration of the fourth embodiment.
Fig. 14 is a diagram illustrating an example of the internal configuration of the reservation management table *tby*.
Fig. 15 is a flow chart illustrating an example of how the mobile server 5 operates during the reservation of a program.
Fig. 16 is a flow chart illustrating an example of how the mobile server 5 operates during the reproduction of a program.

### BEST MODE FOR CARRYING OUT THE INVENTION

The following is a description of embodiments of the present invention.

### 1. First Embodiment

In the present embodiment, a mobile server for receiving mobile broadcasts on behalf of a portable terminal is provided, the mobile broadcasts that are received by the mobile server are converted into data reproducible by the portable terminal, and the data is forwarded to the portable terminal over a mobile communications network. The following is a more detailed description.

### 1-A: Configuration of the First Embodiment

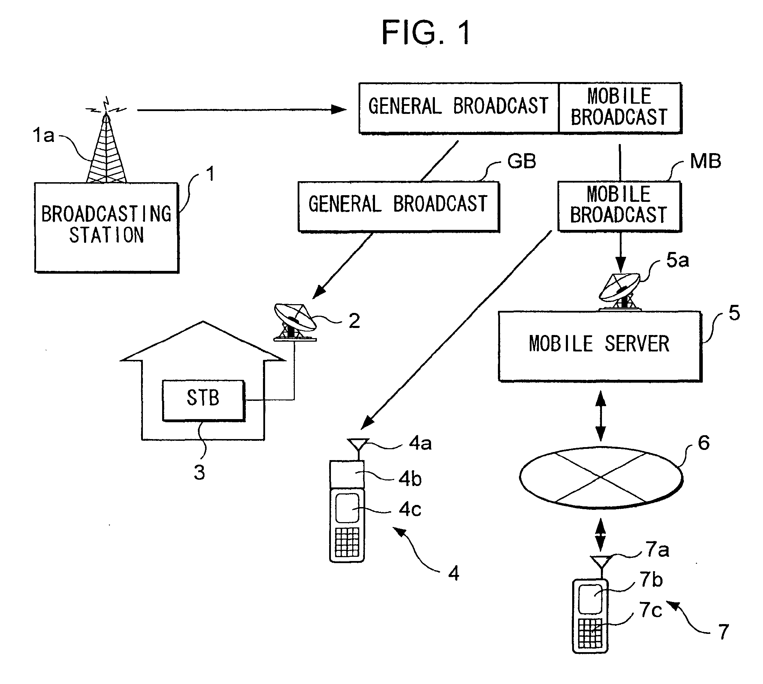

Fig. 1 is a block diagram showing an example of the overall configuration of the present embodiment. In Fig. 1, a broadcasting station 1 broadcasts a digital satellite broadcast from a dedicated antenna 1a via a satellite (not shown in the drawing). For this digital satellite broadcast, a mobile broadcast MB intended for portable terminals is multiplexed with a general broadcast GB. More specifically, one channel of the digital satellite broadcast, which uses broadcasting satellites and communications satellites, is technically separated into 13 segments. Of these 13 segments, for example ten segments are allocated to the general broadcast GB and the remaining three segments are allocated to the mobile broadcast MB which is broadcast for portable terminals such as a portable terminal.

The general broadcast GB is received by a STB (set-top box) 3 via a parabolic antenna 2 at each household. The STB 3 is ordinarily installed near a television receiver (omitted from the drawings) within the household. The STB 3 demodulates the signals of the received general broadcast GB, decodes those signals, converts them from digital to analog and then supplies them to the television receiver. This allows for the general broadcast GB to be viewed within the household. It should be noted that this D/A conversion is unnecessary when the television receiver is a digital receiver.

The digital satellite broadcast is received also by a mobile server 5 via a parabolic antenna 5a. The mobile server 5 separates the mobile broadcast MB from the received digital satellite broadcast and performs a specific conversion. The mobile server 5 then forwards the converted data to a portable terminal 7 via a mobile communications network 6. The mobile server 5 can carry out communications with multiple portable terminals via the mobile communications network 6, although in the configuration shown in Fig. 1 it performs communication with the portable terminal 7.

The portable terminal 7 receives data sent from the mobile server 5 via an antenna 7a. The portable terminal 7 then reproduces the received data and displays them on a display 7b. The portable terminal 7 is provided with an operating unit 7c, which is made up of an input unit with which numbers and character strings can be keyed in and a selecting unit for selecting items in a menu, for example. The user of the portable terminal 7 uses the operating unit 7c to control the operations of the portable terminal 7. Specifically, reproduction of data forwarded from the mobile sever 5, interruption of reproduction, and scrolling of the screen displayed on the display 7b can be effected by the above operations. The portable terminal 7 does not have the function of directly receiving the mobile broadcast MB. However, by using the mobile server 5 as described above, the portable terminal 7 can indirectly receive the mobile broadcast MB.

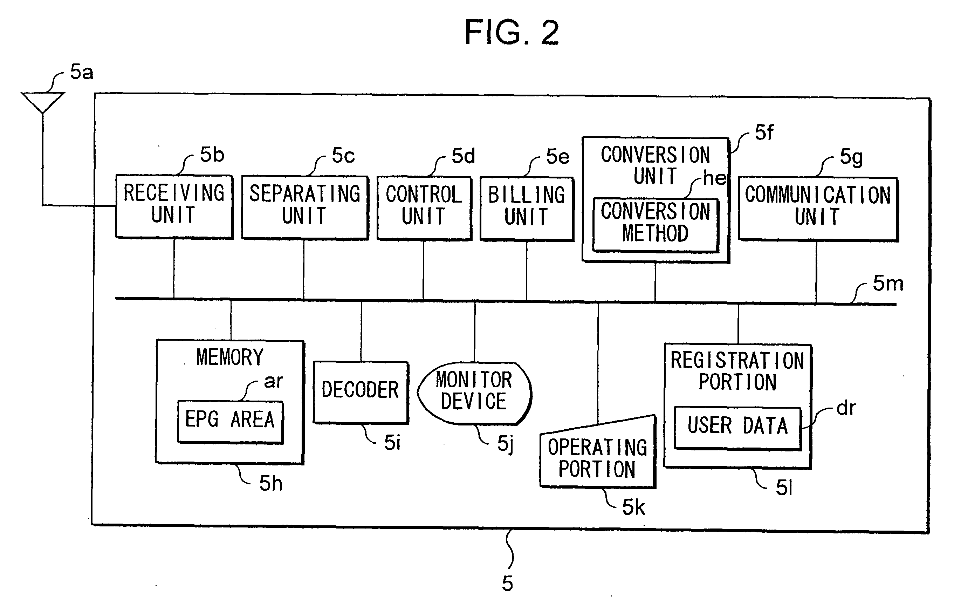

Fig. 2 is a block diagram showing an example of the internal configuration of the mobile server 5. In Fig. 2, a receiving unit 5b, a separating unit 5c, a control unit 5d, a billing unit 5e, a conversion unit 5f, a communication unit 5g, a memory 5h, a decoder 5i, a monitor 5j, an operating unit 5k, and a registration unit 5l are connected via a system bus 5m.

The control unit 5d is for example made up of a CPU (central processing unit), a ROM (read only memory), and a RAM (random access memory), and controls the various units by executing a program stored in the ROM. The receiving unit 5b selects the channel of the digital satellite broadcast via the parabolic antenna 5a, and receives and demodulates the selected digital satellite broadcast. The separating unit 5c separates the multiplexed mobile broadcast MB from the received data. The decoder 5i decodes data compressed for example by a MPEG (moving picture experts group; a standard format for compressing and decompressing color video) format. The communication unit 5g performs communications with the portable terminal 7 via the mobile communications network 6.

The mobile broadcast MB received by the mobile server 5 is temporarily stored in the memory 5h. The mobile server 5 analyzes the ID of the header of the received data and determines whether it is EPG (electrical program guide) data *de.* If it is determined to be EPG data *de,* the EPG data *de* is stored in a specific EPG area *ar* within the memory 5h. Data stored within the memory 5h are output to the monitor 5j by the person maintaining the mobile server by manipulating the operating unit 5k. It should be noted that when the storage area becomes full, the data in the memory 5h is deleted in order from the oldest data.

The owner of the portable terminal 7 carries out a predetermined user registration in advance, and user data *dr* registered are stored in the registration unit 51 at this time. For this user data *dr,* information such as user ID, password, address, area of residence, credit card number, payment plan, and terminal data (such as terminal type) are registered. Of these, the "payment plan" includes an "billing method" and a "payment method," for example. The "billing method" can for example be the method of billing a communications fee that corresponds to the amount of communication time, or the method of billing an information supply fee for each access. The "payment method" is for example bank account withdrawal or payment by credit card. The data conversion method *he* necessary for reproducing the mobile broadcast MB with the portable terminal 7 is determined according to the "terminal data" of the user data *dr,* and stored in the conversion unit 5f in association with the user ID.

This conversion method *he* is a specific algorithm for the conversion of data. More specifically, it is for example an algorithm for converting from MPEG2, which is for the general broadcast GB, to MPEG4, which is for the mobile broadcast MB. It can also be an algorithm for converting a data descriptive language or an algorithm for converting the screen layout, for example.

The conversion unit 5f converts the inputted data according to this conversion method *he.* For example, if the portable terminal 7 can reproduce only still frames, frames representing scenes of moving pictures are cut out. Or for example if the portable terminal 7 can reproduce only text data, then moving pictures are replaced with detailed program descriptions stored in the EPG data *de.* Thus, the mobile server, after converting data into data that can be reproduced by the portable terminal 7, forwards the converted data, so that a service suited for portable terminals is provided to the user.

When the portable terminal 7 ends the connection, a predetermined usage fee is generated in accordance with the "payment plan" in the user data *dr,* and the generated usage fee is accumulated in the billing unit 5e. The billing unit 5e then settles the accumulated usage fee according to a predetermined time schedule.

### 1-B: Operation of the First Embodiment

The following is an explanation of the operation of the present embodiment.

The operation of the present embodiment can be broadly divided into a continuous operation and an intermittent operation.

### (1) Continuous Operation

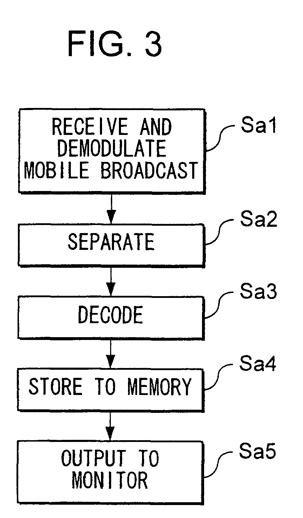

Fig. 3 is a flow chart illustrating an example of the operation continually performed by the mobile server 5. In Fig. 3, first the receiving unit 5b receives the digital satellite broadcast using the parabolic antenna 5a and demodulates the received signal (step Sa1). The demodulated data is output to the separating unit 5c, and the mobile broadcast MB multiplexed with the digital satellite broadcast is separated (step Sa2). The separated mobile broadcast MB is then decoded by the decoder 5i (step Sa3). The decoded data is temporarily stored in the memory 5h (step Sa4). At this time, if the data is EPG data *de,* then they are temporarily stored to the EPG area *ar*. Data stored in the memory 5h or the EPG area *ar* are then output to the monitor 5j when the person maintaining the mobile server 5 carries out a predetermined control using the operating unit 5k (step Sa5).

### (2) Intermittent Operation

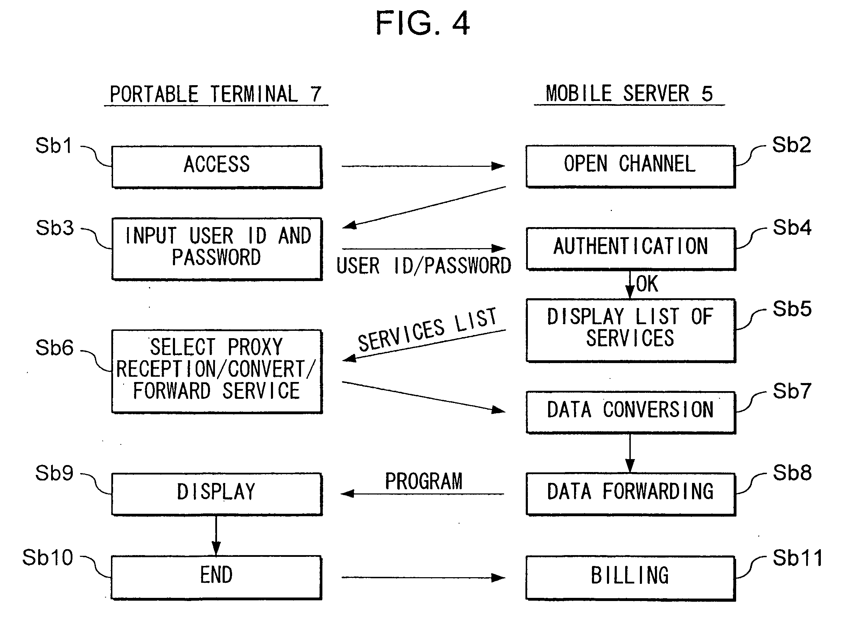

Fig. 4 is a sequence diagram illustrating an example of the operation of the portable terminal 7 and the mobile server 5 when the portable terminal 7 accesses the mobile server 5. In Fig. 4, first the portable terminal 7 accesses the mobile server 5 (step Sb1). Then the mobile server 5 opens a channel between the communication unit 5g and the portable terminal 7 (step Sb2). The mobile server 5 sends a signal to the portable terminal 7 requesting the user ID and password, and a screen for inputting the user ID and password is displayed on the display 7b. The user then inputs their user ID and password by operating the operating unit 7c (step Sb3), and the user ID and password are sent to the mobile server 5. The mobile server 5 refers to the user IDs and passwords in the user data *dr* and performs an authentication process (step Sb4). When authentication is complete, the mobile server 5 sends data on the services which the user can use to the portable terminal 7, and displays a list of these services on the display 5b (step Sb5).

Next, when the user selects the "proxy reception/convert/forward service" from the list of displayed services (step Sb6), the data conversion process is performed in the mobile server 5 (step Sb7). More specifically, first the conversion unit 5f searches the conversion methods *he* with the user ID as the key, and reads out the conversion method for that user. Then the control unit 5df reads out the appropriate data from the memory 5h and outputs that data to the conversion unit 5f. Next, the conversion unit 5f converts the inputted data according to that conversion method *he.* A data forwarding process is then performed (step Sb8). The converted data is appropriately forwarded to the portable terminal 7 via the communication unit 5g. The result is that a program made up of data converted to data which can be reproduced by the portable terminal is sent to the portable terminal 7. The portable terminal 7 reproduces the received program and displays it on the display 5b (step Sb9). The user is then able to view that particular program.

When the user operates the operating unit 7c to perform a predetermined end operation, the mobile server 5 (step Sb10) is notified of this. Next, the communication unit 5g closes the channel and then a billing process is performed by the billing unit 5e (step Sb11). That is, the billing unit 5 bills the usage fee based on the "billing method" that is registered in the "payment plan" of the user data *dr.* The billed usage fee is then settled according to the "payment method" registered in the "payment plan." For example, when the method of payment is by credit card, the usage fee is totaled up each month, the "credit card number" in the user data *dr* is referenced, and the pertinent credit card company is billed.

As described above, with the present embodiment, the mobile server 5 provides a proxy reception service, a data conversion service, and a data forwarding service. Consequently, even with a portable terminal 7 that does not have the ability to directly receive the mobile broadcast MB from a broadcasting station, or even with one that does have the ability to directly receive the mobile broadcast MB but for geographical or other reasons cannot make the reception, the user can indirectly receive the mobile broadcast MB by accessing the mobile server 5. As a result, users who have finished their user registration can view the mobile broadcast MB when away from the home, for example, any time they wish with their own portable terminal 7 by using the above services.

Moreover, according to the present embodiment, the mobile broadcast MB is converted into data that can be reproduced by the portable terminal 7 and then sent to that portable terminal, so the user can view the broadcast regardless of the functions of their portable terminal. Consequently, users do not have to modify their existing portable terminal in order to view the mobile broadcast MB, and are able to view the mobile broadcast MB without switching to a terminal type that supports the mobile broadcast MB as long as they are registered for the above services.

### 1-C: Modified Examples of the First Embodiment

The following are modifications which are possible with the above-described first embodiment.
(1) In the present embodiment, the mobile server performs user authentication with the user ID and password input by the user, but it is also possible for authentication to be performed using an ID such as a sender number that is preset on the portable terminal 7, or authentication can be performed using fingerprint data or voice pattern data of the user, for example.
(2) In the present embodiment, the mobile broadcast MB is assumed to be conducted over a single dedicated channel, however there is no limitation to this. When the mobile broadcast MB has a plurality of channels, it is possible for example for the mobile server 5 to register the channel desired by the user during registration into the user data *dr* as the standard channel. Then when the user connects to the mobile server 5, that standard channel is read out and the broadcast corresponding to that channel is received and forwarded. It is also possible for the EGP data *de* to be read out from the EPG area *ar* and forwarded to the portable terminal 7 at the request of the user. The mobile server 5 then receives the program for the channel selected by the user and forwards the program to the portable terminal 7. It is also possible to enable the user to freely change channels. It is also possible to make it so that when the user selects a pay channel, a certain usage fee is added by the billing unit 5e.
(3) In the present embodiment, the portable terminal 7 does not have the function of directly receiving the mobile broadcast MB and thus receives the mobile broadcast MB indirectly via the mobile server 5. However, it is also possible for a portable terminal capable of directly receiving a mobile broadcast MB to indirectly receive the mobile broadcast MB via the mobile server 5. In Fig. 1, a portable terminal 4 is an example of a portable terminal capable of directly receiving the mobile broadcast MB. More specifically, the portable terminal 4 receives the mobile broadcast MB with an antenna 4a, and with a receiver 4b decodes and demodulates the received signal. The portable terminal 4 then reproduces the decoded data and displays them on a display 4c. In this case it is not necessary for the mobile server 5 to convert the data, and it can forward the data of the mobile broadcast MB as is to the portable terminal 4. It is also possible for the mobile server 5 to receive the general broadcast GB, in which case the mobile server 5 for example performs data conversion from MPEG2, which is for the general broadcast GB, into MPEG4, which is for the mobile broadcast MB.
(4) In the present embodiment, a data conversion process is performed, however, when not necessary that data conversion process does not need to be performed. Cases in which data conversion is unnecessary include, for example, when the mobile broadcast MB is forwarded to the portable terminal 4, which supports the mobile broadcast MB. In this case the data can be forwarded as is.
(5) In the present embodiment, the program is reproduced on the portable terminal 7 with an open channel, but it is also possible to download the entire program onto the portable terminal 7 and disconnect the channel, after which the program can be reproduced by a reproduction command from the user.

### 2. Second Embodiment

The following is a description of a second embodiment of the present invention. In the present embodiment, a two-way server, which mediates data between the portable terminal 7 and the broadcasting station 1, is provided in addition to the configuration of the above first embodiment, and thus data received by the portable terminal 7 from the mobile server 5 are then forwarded to the broadcasting station 1. The following is a more detailed description.

### 2-A: Configuration of the Second Embodiment

With some exceptions, the configuration of the present embodiment is the same as that of the above first embodiment. Consequently, an explanation of components that are shared with the above first embodiment will be omitted from the following description. Furthermore, identical numerals will be used for components that are shared with the first embodiment.

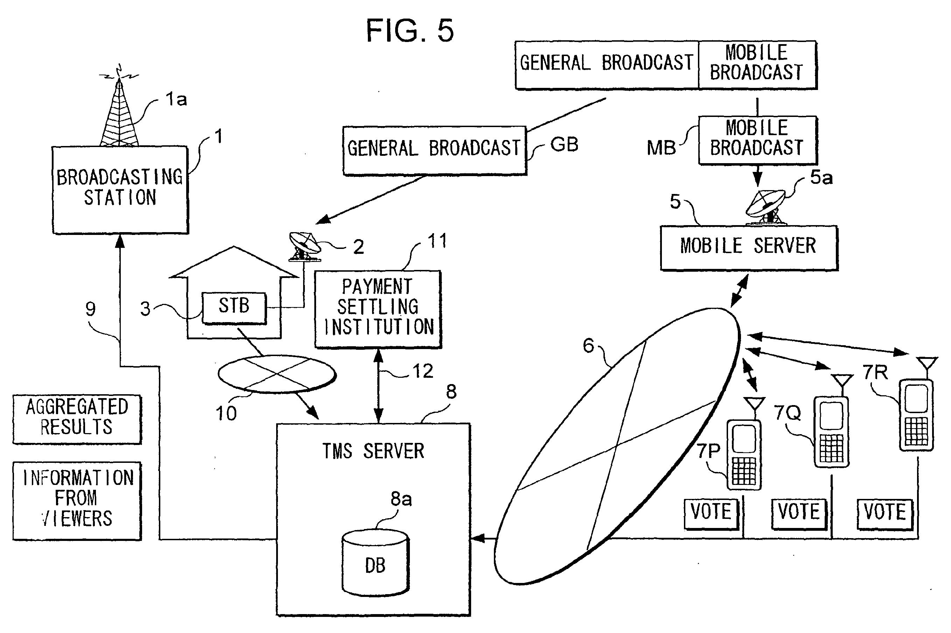

Fig. 5 is a block diagram illustrating an example of the overall configuration of the present embodiment. In Fig. 5 a TMS (transaction management system) server 8 is a two-way server provided between portable terminals 7P, 7Q, and 7R and the broadcasting station 1, and is for performing two-way communication with the broadcasting station 1 via a dedicated line 9. The TMS server 8 includes an internal DB (database) 8a. The TMS server 8 is connected to the STB 3 within the household over an ordinary telephone network 10, and thus can take the reaction of the viewers watching the general broadcast GB regarding the program and forward that reaction to the broadcasting station 1. Additionally, the TMS server 8 is connected to a payment settling institution 11 with a dedicated line 12, and carries out communication with the payment settling institution 11. The TMS server 8 receives data from the portable terminals 7P, 7Q, and 7R via the mobile communications network 6. The portable terminals 7P, 7Q, and 7R are portable terminals similar to the portable terminal 7 of the first embodiment.

The payment settling institution 11 is, for example, a credit card company or a bank for settling transactions. Data generated when the user uses a two-way program and which are necessary for settling payment are collected in the TMS server 8 and sent to the payment settling institution 11. This means that the TMS server 8 functions as a payment settling server. For example, the TMS server 8 can settle payment for an online shopping program. Apart from this payment settling function, the TMS server 8 includes functions such as member registration and management.

The present embodiment illustrates an example of the application of the present invention to an audition program, which is a viewer participation type two-way program. The broadcasting station 1 in Fig. 5 multiplexes a mobile broadcast MB with a general broadcast GB and broadcasts. The audition program is broadcast by this mobile broadcast MB. The audition program is received by the mobile server 5, and after a predetermined data conversion, it is forwarded to the portable terminals 7P, 7Q, and 7R via the mobile communications network 6. The users place their vote regarding the audition using the portable terminals 7P, 7Q, and 7R, and data pertaining to those votes are sent to the TMS server 8 via the mobile communications network 6. The data that are sent are aggregated in the TMS server 8, and the results of that aggregation are transmitted to the broadcasting station 1. The aggregated results transmitted to the broadcasting station 1 can at any time be affected in the audition program. In this way the users can participate in the audition program while away from home using their portable terminal.

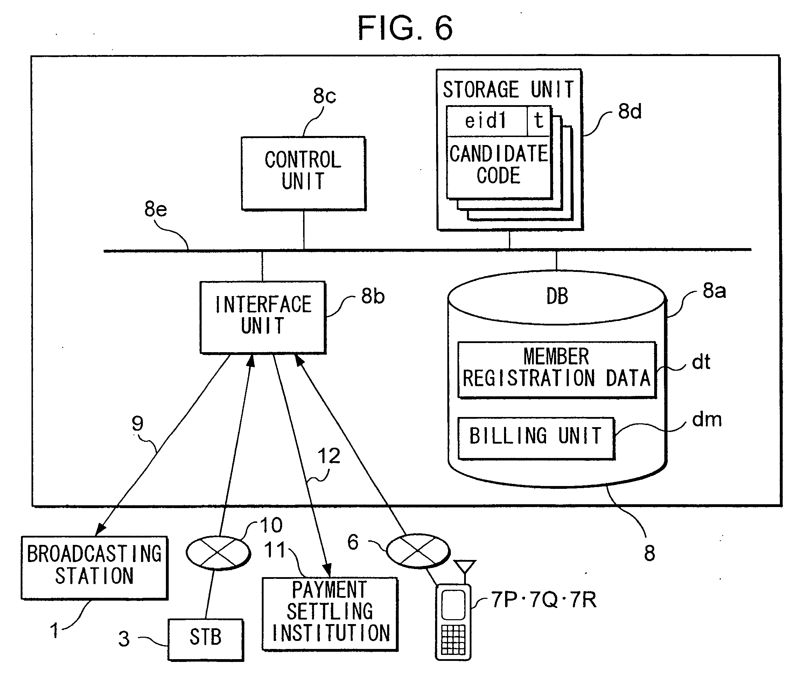

Fig. 6 is a block diagram showing an example of the internal configuration of the TMS server 8. In Fig. 6, a database 8a, an interface 8b, a control unit 8c, and a storage unit 8d are connected via a system bus 8e.

The interface 8b has the function of communicating with the aforementioned broadcasting station 1, the STB 3, the payment settling institution 11, and the portable terminals 7P, 7Q, and 7R.

The control unit 8c is for example made up of a CPU (central processing unit), a ROM (read only memory), and a RAM (random access memory), and controls the various units by executing a program stored in the ROM.

A user wishing to use the services of the present embodiment first accesses the TMS server 8 to complete a certain membership registration. Member registration data *dt* registered at this time is stored in the database 8a. The member registration data *dt* includes user ID, password, address, area of residence, credit card number, and payment plan, for example. Of these, the user ID and password can be the same as the user ID and password in the user data *dr* of the first embodiment. This is so that input of the user ID and password can be omitted.

When a program identification number (for example: eid1), which is the number for identifying the program, the reception completion time (for example: t), which is the time that reception of the registration is completed, and the candidate code of the candidate selected by the user are sent from the portable terminals 7P, 7Q, and 7R to the TMS server 8 via the mobile communications network 6, that program identification number, reception completion time, and candidate code are temporarily stored in the storage unit 8d. Data that are stored in the storage unit 8 are erased in order from the oldest data when the storage area becomes full.

When the TMS server 8 is accessed from the portable terminals 7P, 7Q, and 7R, it performs the predetermined billing process with respect to this access. More specifically, the TMS server 8 reads out the payment plan from the member registration data *dt*, generates a usage fee in accordance with the payment plan, and accumulates data pertaining to that usage fee in a billing unit *dm* in the database 8a. The TMS server 8 then accesses the payment settling institution 11 and performs a predetermined payment settling process using the data accumulated in the billing unit *dm.* For example, the usage fee is totaled monthly and billed to the user's credit card company using the credit card number in the member registration data *dt.*

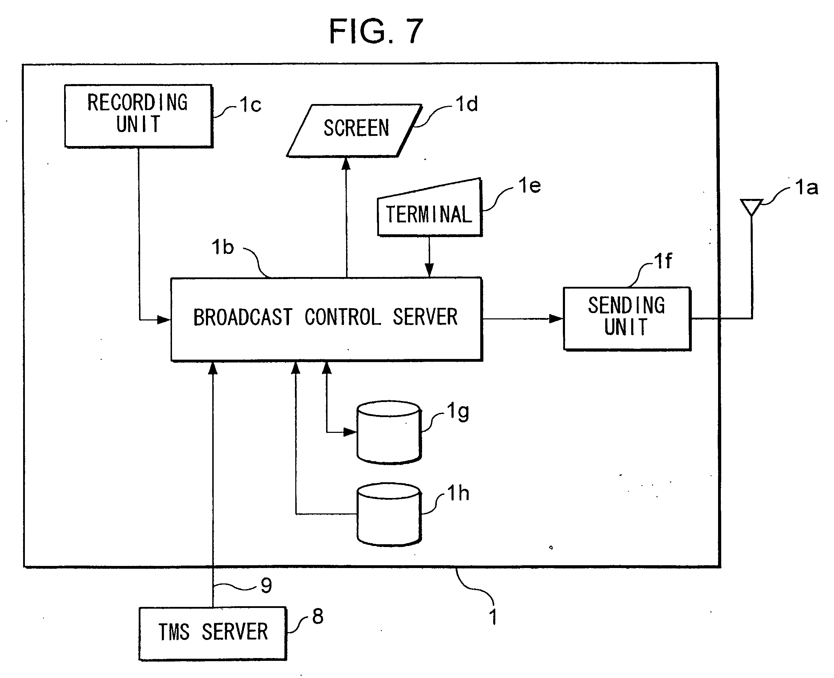

Fig. 7 is a block diagram illustrating an example of the internal configuration of the broadcasting station 1. In Fig. 7, a broadcast control server 1b controls broadcasting. The broadcast control server 1b is connected to a recording unit 1c, a screen 1d, a terminal 1e, a sending unit 1f, a program DB (database) 1g, and a voting form DB (database) 1h. The broadcast control server 1b is also connected to the TMS server 8 with the dedicated line 9. The sending unit 1f is connected to an antenna 1a.

The recording unit 1c records the audition program and stores that recorded program data in the program DB 1g. The program DB 1g, also stores program data that have already been recorded, in addition to the recorded audition program data. The screen 1d is a large screen set up in the studio for the audition program. The terminal 1e is a command terminal for performing specific commands to the broadcast control server 1b. The sending unit 1f broadcasts the program that is outputted from the broadcast control server 1b via the antenna 1a.

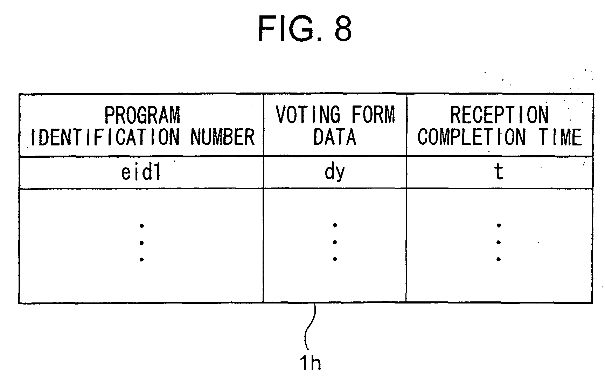

Fig. 8 is a diagram showing an example of the internal configuration of the voting form DB 1h. The voting form DB 1h includes the program identification number, voting form data, and the reception completion time. The program identification number *eid1*, the voting form data *dy*, and the reception completion time *t* are registered in advance by the program staff operating the terminal 1e, as shown in the Fig. 8. The voting form data *dy* is used for displaying a specific voting form screen on the portable terminal 7P, for example. The voting form data *dy* are written in HTML (hypertext markup language), for example. The voting form data *dy* include a list of the candidates in the audition program and the address of the TMS server 8. They also include the candidate codes corresponding to the candidates. The reception completion time *t* is the time at which the reception of votes for the audition program is over.

### 2-B: Operation of the Second Embodiment

The operation of the present embodiment will now be explained next.

It should be noted that the operation in the present embodiment, with some exceptions, is the same as the operation in the above-described first embodiment. Consequently, an explanation of components that are shared with the above first embodiment will be omitted from the following description. Furthermore, identical numerals will be used for components that are shared with the first embodiment. Also, because the portable terminals 7P, 7Q, and 7R have identical functions, for the sake of convenience the following explanation is only for the portable terminal 7P.

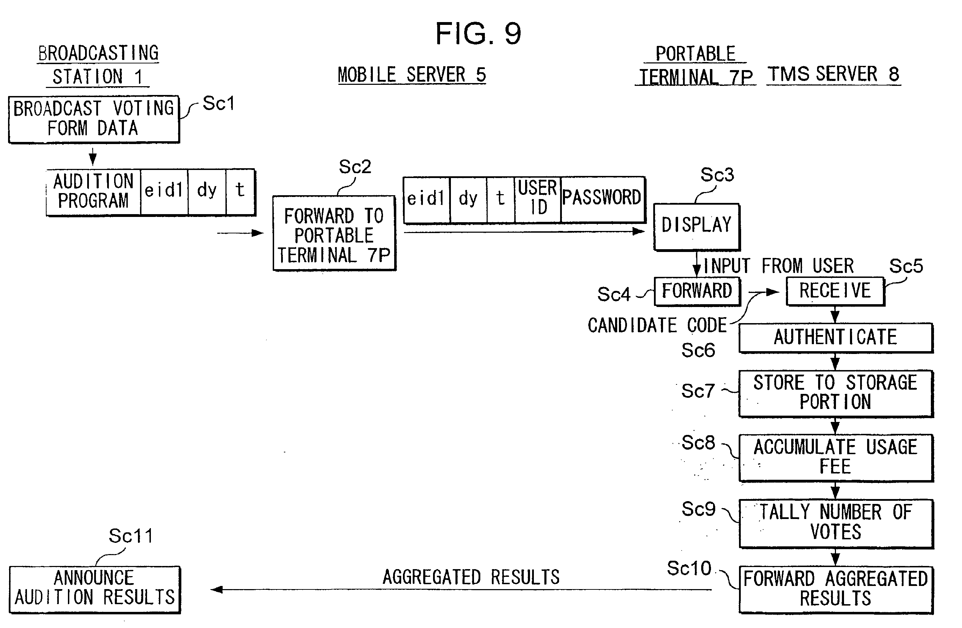

Fig. 9 is a sequence diagram showing an example of the operation of the present embodiment. In the broadcasting station 1, the broadcast control server 1b is currently recording an audition program with the recording unit 1c and broadcasting it with the sending unit 1f. In Fig. 9, first the user of the portable terminal 7P connects to the mobile server 5 in the same way as in the first embodiment to view the audition program that is being broadcast. Then, when during the broadcast of that program the program staff operates the terminal 1e in accordance with the progress of the program, the program identification number *eid1,* the voting form data *dy*, and the reception completion time *t* are read out from the voting form DB 1h and are multiplexed with the audition program and broadcast (step Sc1).

Next, the mobile server 5 receives that audition program and separates and extracts the program identification number *eid1*, the voting form data *dy*, and the reception completion time *t*. This is followed by the mobile server 5 adding the user ID and password to the separated and extracted data and forwarding these data to the portable terminal 7P (step Sc2).

Next, the portable terminal 7P receives these data and by the voting form data *dy* displays the voting form screen on the display 7b (step Sc3). The displayed voting form screen displays the list of the candidates and a message urging the selection of a candidate. The user then uses the operating unit 7c to select a desired candidate and vote. This results in the candidate code corresponding to the selected candidate, together with the program identification number *eid1*, the reception completion time *t*, and the user ID and password, being sent to the address of the TMS server 8 that is included in the voting form data *dy* (step Sc4).

Next, the TMS server 8 receives the sent data via the interface 8b (step Sc5). The TMS server 8 then checks the received user ID and password against the user ID and password of the member registration data *dt* and performs an authentication process (step Sc6). At this time the TMS server 8 discards the received data if the time that the data was received is later than the reception completion time *t.* Next, the TMS server 8 temporarily stores the program identification number *eid1*, the reception completion time *t*, and the candidate code in the storage unit 8d (step Sc7). Then a usage fee is generated in accordance with the payment plan and is accumulated in the billing unit *dm* (step Sc8). The TMS server 8 performs the predetermined payment settling process using these data. For example, each month the TMS server 8 totals these data and bills the usage fee to the payment settling institution 11, which is for example a credit card company, using the credit card number in the member registration data *dt.*

Next, when it becomes the reception completion time *t*, the TMS server 8 reads out the candidate codes in the storage unit 8d and totals the number of votes for each candidate code (step Sc9). The TMS server 8 then processes the results of this total into audition results of a predetermined format and sends the results to the broadcast control server 1b in the broadcasting station 1 via the interface 8b (step Sc10).

Next, when the program staff operate the terminal 1e in coordination with progress in the program, the broadcast control server 1b displays the received audition results on the screen 1d (step Sc11). The recording unit 1c records this display and the sending unit 1h broadcasts it, making it possible for the user of the portable terminal 7P to learn of the results of the audition. Thus, members participate in the program, and a two-way program in which viewers can participate is achieved.

It should be noted that the audition results can also be once again multiplexed into the audition program and broadcast without being displayed on the screen 1d. In this case, these audition results can be displayed over the program which is being displayed on the portable terminal 7P.

### 2-C: Modified Examples of the Second Embodiment

The above-described second embodiment can be modified as follows.
(1) It is also possible that the mobile server 5 has the functions of the TMS server 8 in the present embodiment, in which case the authentication process is performed only once and also the payment settlement process can be consolidated. Furthermore, the user has to register only once.
(2) In the present embodiment, the TMS server 8 is connected to the STB 3 and the payment settling institution 11 via the dedicated lines 10 and 12, however, there is no limitation to this. For example, a communications network such as an ordinary telephone network or the Internet can also be used. It is also possible for the mobile communications network accommodating the mobile server and the mobile communications network accommodating the TMS server to be different networks.
(3) In the present embodiment, a case is presented in which the viewer participation type two-way program is an audition program, however, there is no limitation to this. For example, it can also be a quiz program, in which case "answer" can be used in place of "vote." In other words, it is only necessary that the program is a two-way program. It should be noted that as in "vote" and "answer," what is sent from the portable terminal 7P to the TMS server 8 can be a response to the two-way program that is being received.
(4) In the present embodiment, the address of the TMS server 8 can be a telephone number, an E-mail address, or an IP address, for example, corresponding to the TMS server 8. That is to say, it is only necessary that the address for the TMS server 8 is specifiable.
(5) In the present embodiment, the mobile broadcast MB is received indirectly via the mobile server 5, however, it does not necessarily have to be received indirectly. For example, it is also possible that members who view such a viewer participation type two-way program shown on a large screen in town while away from home participate in that program using their portable terminal 7P.
(6) In the present embodiment, the present invention is applied to an audition program, but it is also possible to apply it to a television shopping program or the like, and to leave the settlement of payment to the TMS server 8. In this case it can be expected that many persons will apply for popular products and that a lottery may have to be entered when a certain number of applicants is exceeded, and with the present embodiment, the user can be given of the results of this lottery before the end of the program.
(7) In the present embodiment, it is also possible to accumulate diverse information on viewer transactions and put them into a database. For example, information such as when, during what time period, and what types of products the viewers purchased can be put into a database. Additionally, by using a universal positioning information service that reveals the location of the portable terminals, it is possible to obtain positioning information on where the viewers are watching the program and making such transactions. GPS (global positioning system) can be used to obtain this positioning information. A service is also possible in which viewer interests and needs are analyzed from a database in which such information has been gathered and the results of that analysis collected and provided as chargeable or free information. For example, that information could conceivably be provided to program production companies for a fee. In particular, because of the many unpredictable elements in mobile broadcasts there is a great potential for program production companies, for example, to research what kind of programs should be made. From such a viewpoint, this service could become a significant point of reference when making plans for such programs.
(8) In the present embodiment, the reception completion time *t* is supplied from the broadcast control server 1b to the TMS server 8, however, it is also possible to register it in the TMS server in advance. In this case the broadcast control server 1b multiplexes and broadcasts only the program identification number *eid* and the voting form data *dy* with the program, and then broadcasts.
(9) In the present embodiment, the totaling of the votes was performed in the TMS server 8, but it is also possible to perform this totaling in the command terminal 1b in the broadcasting station 1. In this case the TMS server 8 only needs to forward the received candidate codes to the command terminal 1b.

### 3. Third Embodiment

A third embodiment of the present invention will now be described next. In the present embodiment, the mobile server obtains the EPG (electrical program guide) multiplexed with the general broadcast GB and sent to the mobile server, and then the mobile server sends it to the portable terminal 7 via the mobile communications network 6. Then the user searches this EPG and selects a program, and with the portable terminal 7 sends a record request command, which includes data regarding the selected program, to a home server installed within the home, and the home server records that program.

### 3-A: Configuration of the Third Embodiment

The configuration of the present embodiment is the same as the configuration of the first embodiment, with some exceptions. Consequently, an explanation of components that are shared with the first embodiment will be omitted from the following description. Furthermore, identical numerals will be used for components that are shared with the first embodiment.

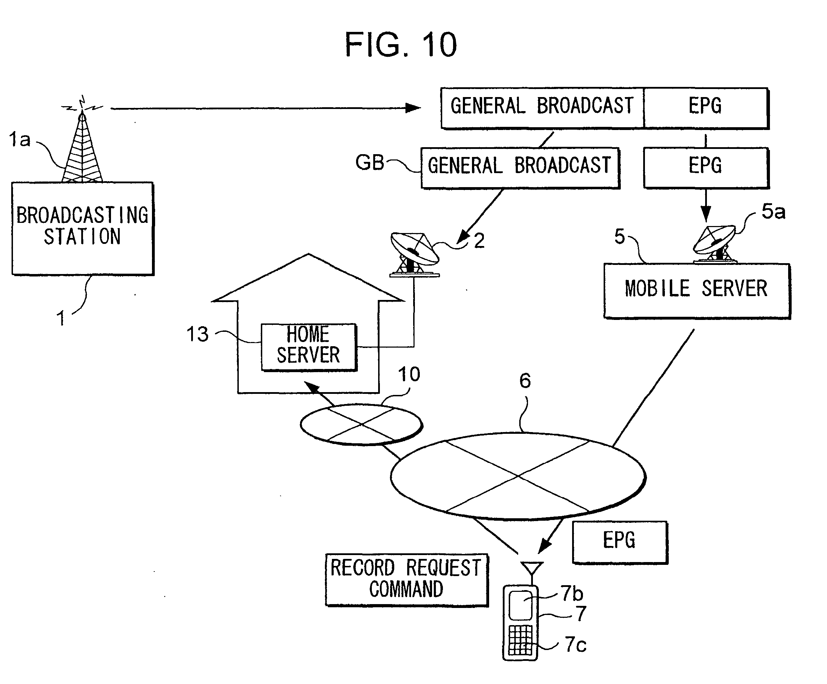

Fig. 10 is a block diagram showing an example of the overall configuration of the present embodiment. As shown in Fig. 10, in this configuration a home server 13 has been provided in place of the STB 3 of the first embodiment. This is a feature that is different from the first embodiment. In Fig. 10 the home server 13 is a server for controlling electrical appliances within the household. The home server 13 includes a receiver function for receiving the general broadcast GB, a communication function for performing communication with the portable terminal 7, and a record function for recording programs. The home server 13 performs communication with the portable terminal 7 via the ordinary telephone network 10 and the mobile communications network 6. In addition, the home server 13 receives the general broadcast GB via the parabolic antenna 2.

In Fig. 10, the EPG multiplexed with the general broadcast is sent from the broadcasting station 1. The mobile server 5 receives this EPG and forwards the received EPG to the portable terminal 7 via the mobile communications network 6. The portable terminal 7 displays the received EPG on the display 7b. The user searches through this and selects the program he would like to record. Next, the user uses the portable terminal 7 to make a request to the home server 13 to record the program. This results in a record request command, which includes data regarding the program for which a record is scheduled, being forwarded to the home server 13 via the mobile communications network 6 and the ordinary telephone network 10. The home server 13 then records the program in accordance with the record request command that is received.

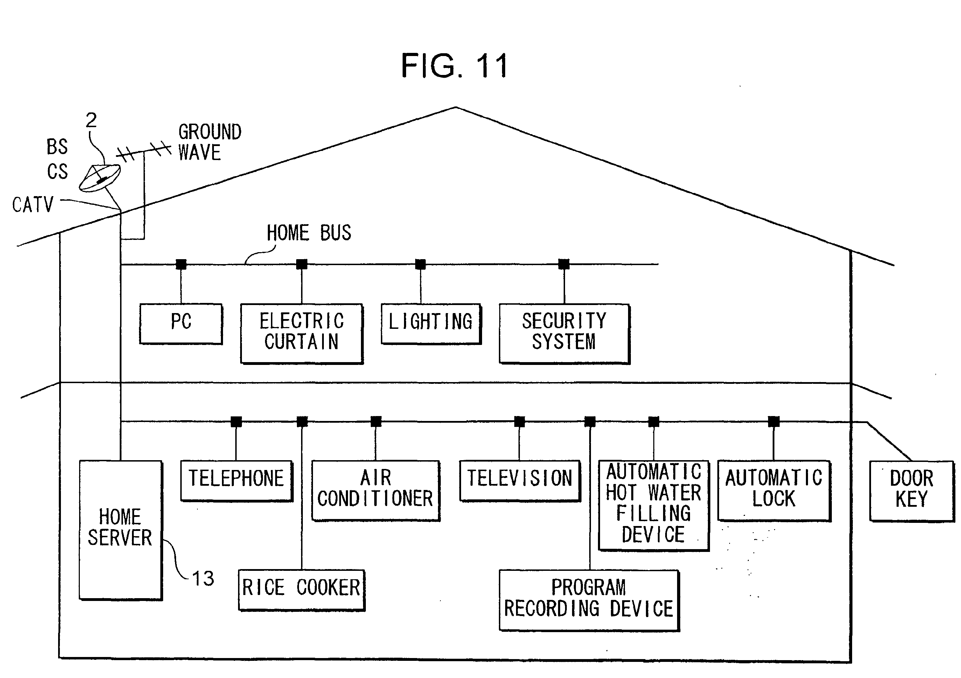

Fig. 11 is a block diagram illustrating an example of the home bus system in which the home server 13 is employed. As shown in Fig. 10, the home server 13 and various electrical appliances within the household are connected via the home bus, and a connector for connecting the home bus and the electrical appliances is provided in each room. Moreover, the home server 13 is connected to the parabolic antenna 2, a terrestrial antenna, a cable for CATV or the like. Information that enters the household is first gathered in the home server 13.

The home server 13 has a function that conforms with the specifications of the existing home bus system (the standard specifications determined regarding the method for connecting and controlling appliances and the procedure for the communication of information from outside the home, so as to uniformly perform the controls for household electrical appliances) such as that shown in the drawing. This function makes it possible for example for household residents to call the home server 13 by telephone from an outside location and control an automatic hot water filling device to fill hot water into the bathtub. It is also possible for the home server 13 to link up with the security system and for example automatically notify a predetermined gas company when a gas leak is detected.

The home server 13 furthermore has a similar function to that of the STB 3 of the first embodiment. For example, the home server 13 has a receiver function for receiving the program of digital satellite broadcasts. The home server 13 also has a communication function for performing communications with the ordinary telephone network 10 via a modem (omitted from the drawings). Moreover, the home server 13 has a recording function for controlling the program recording device shown in the drawing to record programs.

### 3-B: Operation of the Third Embodiment

The following is an explanation of the operation of the present embodiment.

It should be noted that the operation of the present embodiment is the same as the operation of the first embodiment, with some exceptions. Consequently, an explanation of components that are shared with the first embodiment will be omitted from the following description. Furthermore, identical numerals will be used for components that are shared with the first embodiment.

First, the EPG will be described in detail. EPG data is a type of SI (Service Information). EPG data also includes information (for example: channel, broadcasting time, title, genre, brief program description, detailed program description) regarding programs on the broadcast channel from the current time until after a certain time (24 hours, for example).

In digital satellite broadcasts, a band is secured for the EPG data, on which only the EPG data is sent. The EPG data is transmitted frequently, thus it is possible to always keep the newest EPG data in the EPG area *ar* of the memory 5h.

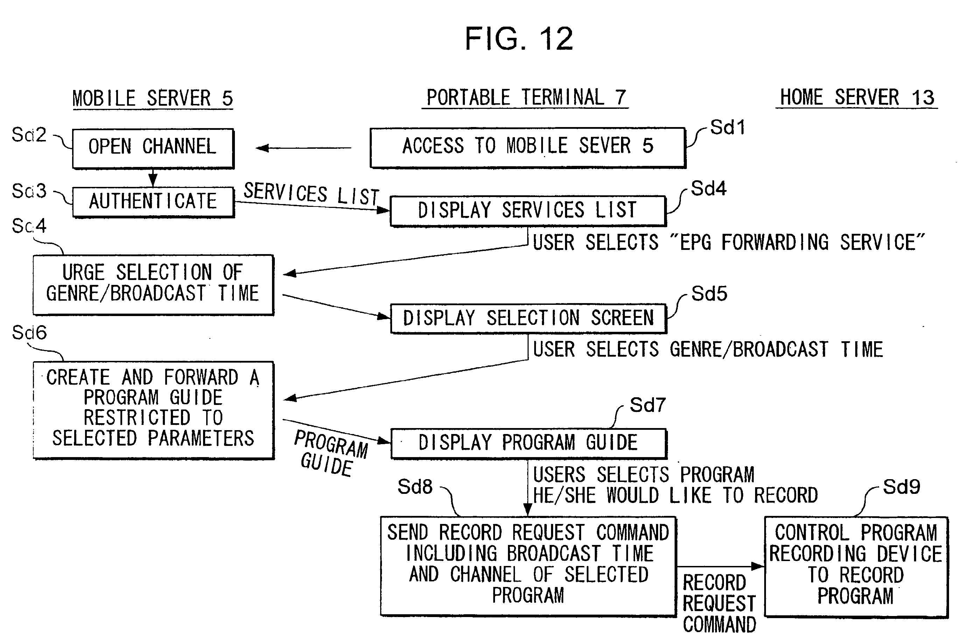

Fig. 12 is a sequence diagram showing an example of the operation of the present embodiment. In the drawing, first the user accesses the mobile server 5 from the portable terminal 7 in the same way as in the first embodiment (step Sd1). Then, the mobile server 5 opens a channel to the portable terminal 7 (step Sd2). Next, the mobile server 5 performs an authentication process with the user ID and password received from the portable terminal 7 (step Sd3). When authentication is complete, the mobile server sends information regarding services available to the user of the portable terminal. A list of those services is displayed on the display 7b (step Sd4). When the user selects the "EPG forwarding service" from this list, the mobile server 5 sends a signal requesting the selection of the genre and broadcast time to the portable terminal 7, and a screen for inputting the selection of the genre and broadcast time is displayed on the display 7b (step Sd5).

Next, when the user operates the operating unit 7c to select the desired broadcast time and genre, the mobile server 5 reads out the EPG data *de* corresponding to those parameters from the EPG area *ar*. The mobile server 5 then creates an EPG which is based on the read EPG data *de* and restricted to match the selected parameters (hereinafter, simply called the program guide), performs the same conversion process as the data conversion process of the first embodiment, and forwards that program guide to the portable terminal 7 (step Sd6). In this way, a program guide suited to the portable terminal 7 is created. For example, when the EPG data *de* includes still pictures of screens representing the programs, then a visual program guide is created if the portable terminal 7 can handle still pictures. If the portable terminal 7 can handle only text data, a program guide is created that is made from text only.

Next, the received program guide is displayed on the display 7b (step Sd7). Then, when the user looks through the program guide that is displayed and operates the operating unit 7c to select a program which he would like to record and requests that the program is recorded, the portable terminal 7 sends to the home server 13 a record request command which includes the broadcast time and channel of the selected program (step Sd8). The home server 13 then controls a program recording device based on that received record request command, and records that program (step Sd9).

It should be noted that the mobile server 5 can also forward the EPG directly to the portable terminal 7 without restricting the EPG according to the genre and broadcast time desired by the user. In this case the selection screen for the genre and the broadcast time is not displayed.

Furthermore, it is also possible to send the program identification number in the EPG data instead of the broadcast time and channel for the program that is selected. It is also possible to send another program identification code such as the G-Code (also called VCR PLUS; the television program identification code made by Gemstar Development Corporation in the USA).

According to the present embodiment as explained above, the user is able to utilize an "EPG forwarding service" while away from home, for example. Consequently, the user can let the home server 13 record a desired program from while away from home, for example. Then, after the user returns home he is able to view that recorded program with a television receiver, for example.

Moreover, with the present embodiment, the mobile server 5 creates a program guide that can be reproduced in one's personal portable terminal 7 and forwards that program guide, thus this "EPG forwarding service" can be used by existing portable terminals.

### 3-C: Modified Examples of the Third Embodiment

The following modifications can be made to the third embodiment described above.
(1) In the present embodiment, the EPG is forwarded, but it is also possible to forward G-Codes (also called VCR PLUS; the television program identification codes made by Gemstar Development Corporation in the USA) in place of the EPG. That is to say, it is only necessary that the information that is forwarded is program selection information for the selection of broadcast programs. As an example of this case, the EPG is converted into G-Codes in the portable terminal 7, to be sent to the home server 13. Or in another example, it is also possible that this conversion is performed by the mobile server 5 if the conversion is made into an algorithm and registered in advance as the conversion method *he.*
(2) In the present embodiment, the portable terminal 7 receives the EPG from the mobile server 5, however, it is not absolutely necessary that it receive this EPG. In this case, the user for example obtains information on the channels and broadcast times, for example, from a newspaper or other such media, and then operates the operating unit 7c to make a direct input.
(3) It is also possible to let the STB 3 of the first embodiment have the functions of the home server 13 in the present embodiment.

### 4. Fourth Embodiment

Next a fourth embodiment of the present invention will now be described. In this embodiment, the mobile server 5 receives reservations for recording programs from the user and records the program in question on behalf of the user. It should be noted that the mobile server 5 according to the present embodiment is different from the mobile servers described in the above embodiments in that it is simultaneously a server accommodated in the mobile communications network 6 and a server on the Internet, whereby programs that are broadcast on the Web can be recorded as well. The following is a more detailed description.

### 4-A: Configuration of the Fourth Embodiment

The configuration of the fourth embodiment is the same as the configuration of the first embodiment with some exceptions. Consequently, an explanation of components that are shared with the first embodiment will be omitted from the following description. Furthermore, identical numerals will be used for components that are shared with the first embodiment.

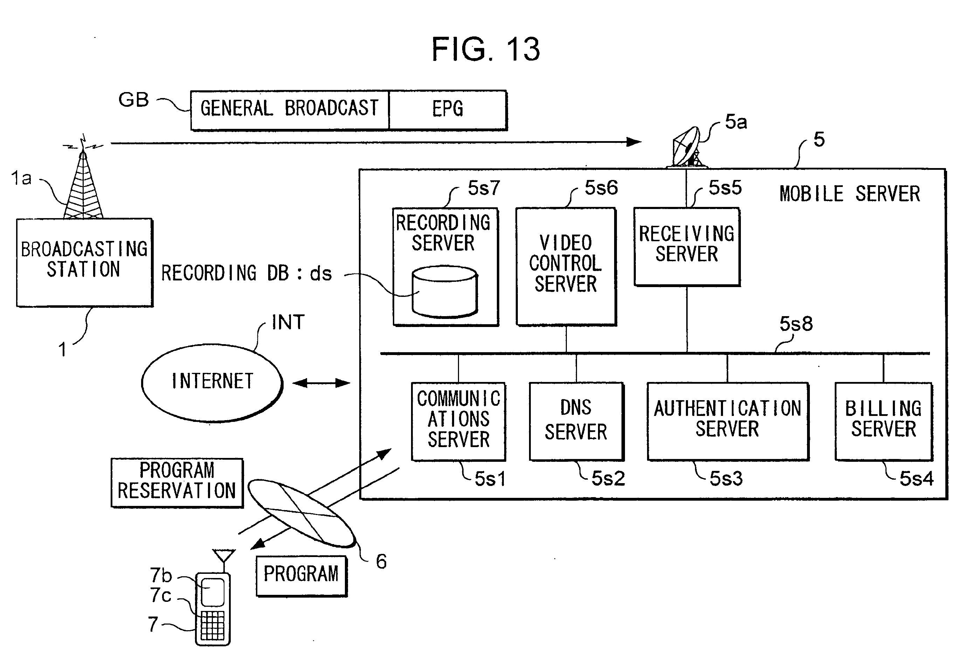

Fig. 13 is a block diagram showing an example of the overall configuration of the present embodiment. As shown in Fig. 13, the mobile server 5 has the function of connecting to the Internet INT as well, as mentioned above. Also, as shown in Fig. 13, the server 5 is made up of various servers. This is to provide an accompanying hosting service for maintaining various types of servers, including a mail server, a Web server, and a file sever, which are not shown in the drawings, and for proving a user with a storage unit of the server for storing programs that are recorded on behalf of the user. In Fig. 13, a communication server 5s1, a DNS server 5s2, an authentication server 5s3, a billing server 5s4, a receiving server 5s5, a video control server 5s6, and a recording server 5s7 are connected via a system bus 5s8.

The communication server 5s1 has a similar function as the communication unit 5g of the first embodiment. In addition, the communication server 5s1 also has a function for connecting to the Internet INT. The DNS server 5s2 manages IP addresses and domain names necessary when downloading data through the Internet INT. The authentication server 5s3 performs authentication of users for the above service. The billing server 5s4 has a similar function as the billing unit 5e of the first embodiment. The receiving server 5s5 has a similar function as the units of the mobile server 5 according to the first embodiment besides the communication unit 5g and the billing unit 5e. The recording server 5s7 has a recording DB (database) *ds* made up of a nonvolatile memory. The recording server 5s7 also has a reservation management table *tby*.

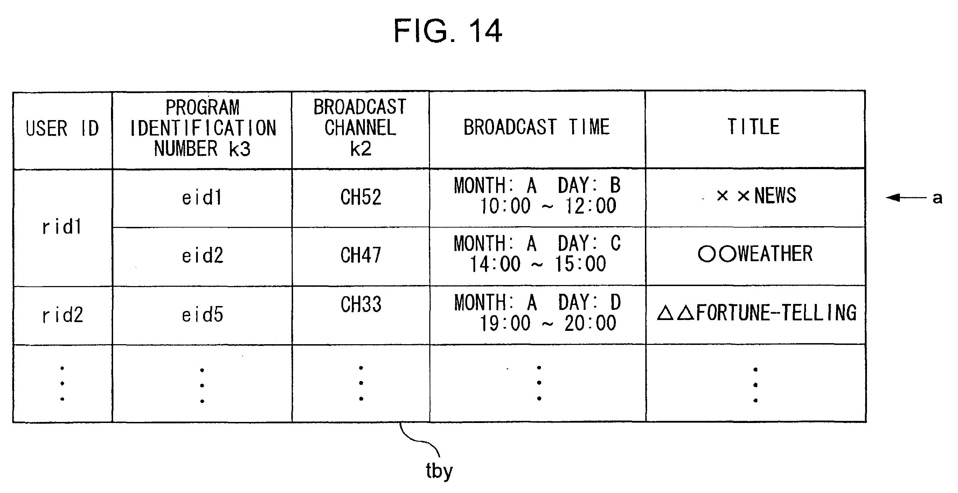

Fig. 14 is a diagram illustrating an example of the internal configuration of the reservation management table *tby*. In Fig. 14, the reservation management table *tby* is made up of the data fields of "user ID", "program identification number k3", "broadcast channel k2", "broadcast time", and "title". "User ID" is the user ID for identifying the user making the reservation. "Program identification number k3" is the number for identifying the program that has been reserved, and is the same as the program identification number k3 in the second embodiment. "Broadcast channel k2" is the channel on which the reserved program is broadcast, and is the same as the broadcast channel k2 of the second embodiment. "Broadcast time" is the time when the reserved program is broadcast. "Title" is the title of the reserved program.

The recording server 5s7 requests that the receiving server 5s5 receives the reserved program when a timer (not shown in the drawings) indicates the arrival of the broadcast time stored in the reservation management table *tby.* The receiving server 5s5 receives that program and stores the received data in the memory 5h. The recording server 5s7 then stores the program data that is saved in the memory 5h in the recording DB *ds.* In this way, the recording of the reserved program is complete. When new programs are recorded they are accumulated in the recording DB *ds* in order. In the recording DB *ds,* the program identification number k3 is stored together with the recorded program. As mentioned above, the recording DB *ds* is made from a nonvolatile memory, so the stored program is not erased even if the power is turned off. For effective use of the storage of the mobile server 5, it is possible to establish a certain retention period for the recorded programs, and when that storage period has passed, the recorded programs are either deleted or backed up in another storage medium, for example. The video control server 5s6 has the function of accepting reservations from the user for programs to be recorded and controlling the various units such that those programs are received and recorded on behalf of the user.

### 4-B: Operation of the Fourth Embodiment

The following is an explanation of the operation of the present embodiment.

It should be noted that the operation according to the present embodiment is the same as the operation of the first embodiment, with some exceptions. Consequently, an explanation of components that are shared with the first embodiment will be omitted from the following description. Furthermore, identical numerals will be used for components that are shared with the first embodiment.

The operation of the present embodiment can be broadly divided into the operation when reserving the program the operation when reproducing the program.

### (1) Operation When Reserving Programs

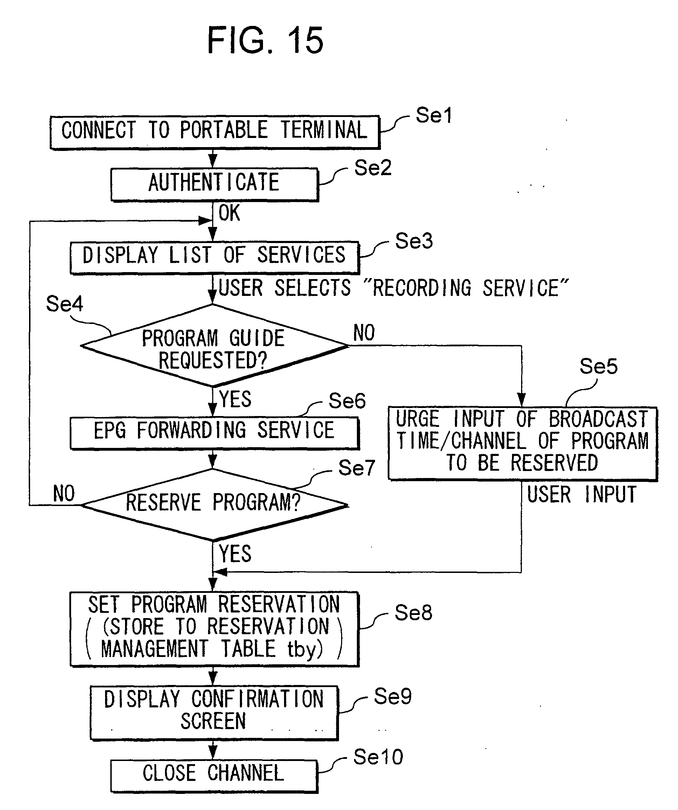

Fig. 15 is a flow chart illustrating an example of how the mobile server 5 operates when reserving a program. In Fig. 15, first, when accessed by the portable terminal 7, the communication server 5s1 opens a channel with the portable terminal 7 in the same way as the communication unit 5g of the first embodiment (step Se1) does. Then the authentication server 5s3 performs an authentication process (step Se2). That is, the authentication server 5s3 sends a signal requesting the user ID and password to the portable terminal 7 via the communication server 5s1. Specifically, when the communication server 5s1 receives the user ID and password from the portable terminal 7, the authentication server 5s3 references the user data *dr* in the receiving server 5s5 and authenticates that user. When the user is authenticated, a list of the services available to that user is displayed on the display 7b (step Se3).

Next, when the user operates the operating unit 7c to select the "recording proxy service" from the list of services, a selection menu such as the following is displayed on the display 7b (step Se4).
"1. Request program guide
2. Do not request program guide"
If "2. Do not request program guide" is selected, the video control server 5s6 urges the user to input the broadcast time and the channel of the program for which a reservation is desired (step Se5). When the user responds to this by inputting the broadcast time and channel to reserve the program, the video control server 5s6 obtains the program identification number k3 and the title of that program from the EPG data *de,* the procedure advances to step Se8, and the settings for the program reservation are performed.

Alternatively, when "1. Request program guide" is selected, the video control server 5s6 requests the receiving server 5s5 to perform a process which is same as the "EPG forwarding service" of the third embodiment (step Se6). This results in a program guide being displayed on the display 7b. At this time, the video control server 5s6 displays a selection menu such as the following on the display 7b (step Se7).
"1. Reserve program
2. Redo"
If the user selects "2. Redo", then the mobile server 5 returns the procedure to step Se3 and once again displays the list of services.

If the user looks over the displayed program guide, chosen a program, and selects "1. Reserve program," the video control server 5s6 makes a request to the recording server 5s7 regarding the program reservation (step Se8). To be more specific, the video control sever 5s6 correlates the user ID with the program identification number k3, the broadcast channel k2, broadcast time, and title of the reserved program, and stores this information in the reservation management table *tby*. At this time, when the program identification number k3 corresponding to the program has already been saved in the reservation management table *tby*, a flag indicating that the programs has already stored (not shown in the drawings) is added to that information and stored. This is to prevent duplicate recordings of the same program. More specifically, when this already reserved flag is added, the recording server 5s7 ignores reservations to which this flag has been added.

As an example, if the results that are stored are those indicated by the *a* arrow in Fig. 14, then the video control server 5s6 displays a confirmation screen such as the one below on the display 7b (step Se9).
"CH52 month: A day: B 10:00-12:00 XX News
Reservation has been received."
When the user responds to this by performing a predetermined confirmation operation, the series of processes is ended and the channel is closed (step Se10). It should be noted that it is possible to allow a plurality of reservations with a single access. In this case, the user performs a predetermined successive reservation operation from the display of the confirmation screen in step Se9. This results in the procedure moving to step Se4.

After this, when it becomes the "broadcast time" stored in the reservation management table *tby*, the recording server 5s7 automatically records the program that has been reserved and stores it to the recording DB *ds.* Thus, a "recording proxy service" is provided.

### (2) Operation When Reproducing Programs

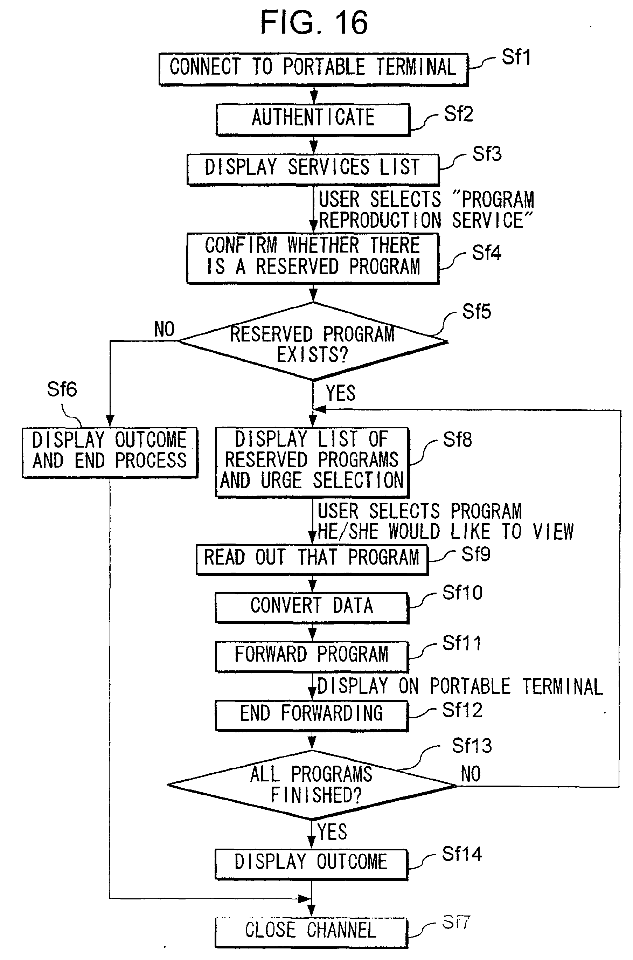

Fig. 16 is a flow chart illustrating an example of how the mobile server 5 operates during the reproduction of a program. In Fig. 16, first, when there is an access from the portable terminal 7, the mobile server 5, like in the operation when reserving a program as explained above, connects to the portable terminal 7 (step Sf1), performs an authentication process (step Sf2), and displays a list of the services (step Sf3).

Next, when the user operates the operating unit 7c to select the "program reproduction service," the video control server 5s6 uses the user ID as a key and searches the reservation management table *tby* to confirm whether there is a reserved program (steps Sf4, Sf5). When the result is that there is no reserved program, the video control server 5s6 transmits a signal indicating this via the communication server 5s1, which is displayed by the display 7b, and the sequence of processes is ended (step Sf6). This is followed by closing the channel (step Sf7).

Alternatively, when there is a reserved program, the video control server 5s6 reads from the reservation management table *tby* all of the "program identification number k3", "broadcast channel k2", "broadcast times", and "titles" corresponding to the user ID. Subsequently, the video control server 5s6 displays a list of the reserved programs based on the data that is read out and urges the user to make a selection (step Sf8). Then, when the user selects the program he would like to see, the video control server 5s6 searches the recording DB *ds* for the "program identification number k3" corresponding to the selected program, and reads out the relevant program (step Sf9).

Next, the video control server 5s6 lets the receiving server 5s5 perform a similar process as the data conversion process of the first embodiment so as to convert the program that has been read out into data which can be reproduced by the user's portable terminal 7 (step Sf10). The video control server 5s6 then lets the communication server 5s1 forward that converted data successively to the portable terminal 7 (step Sf11). As a result, the program is reproduced on the portable terminal 7 and the user is able to view that program. When this forwarding ends (step Sf12), it is determined whether the reproduction of all of the reserved programs is finished (Sf13). If the reproduction is not finished, then the process steps from Sf8 to Sf12 are repeated until the reproduction of the reserved programs is completely finished. On the other hand, when the reproduction is finished, the video control server 5s6 displays a message of completion on the display 7b (step Sf14), after which it closes the channel (step Sf7).

It should be noted that the user can perform a predetermined operation to return at any time to the screen of step Sf8 with the list of reserved programs. Additionally, the user can perform a predetermined end operation to interrupt reproduction and finish this service at any time.

Thus, programs that are recorded with the "recording proxy service" are forwarded to and reproduced on the user's portable terminal 7 in accordance with requests from the user. Consequently, the user can utilize this "program reproduction service" to view programs reserved beforehand on their portable terminal 7 even when away from home, for example. As a result, users is able to enjoy past programs stored in the mobile server 5 on demand with the portable terminal 7.

With the present embodiment, by providing the mobile server 5, which can be shared by numerous portable terminals 7, in the mobile communications network 6, it is possible to consolidate and store those programs among the reserved programs that are duplicate. Consequently, mobile server 5 resources such as capacity can be used effectively.

### 4-C: Modified Examples of the Fourth Embodiment

The following modifications can be made to the fourth embodiment described above.
(1) In the present embodiment, the user views programs which he has reserved, but it is also possible for the user to view programs which have been reserved by somebody else. Such a service is possible because all of the recorded programs are stored in the recording DB *ds* and managed collectively. In this case, it is also possible that the mobile server charges a certain usage fee to the user.
(2) It is possible that the above-described STB 3 has functions equivalent to those of the mobile server 5 according to the present embodiment. In this case, it is not necessary to provide functions equivalent to those of the billing server 5s4, the authentication server 5s3, and the DNS server 5s2. Alternatively, it is also possible that the home server 13 has the functions of the mobile server 5.
(3) In the present embodiment, the EPG was obtained from broadcast waves, but it is also possible to obtain the EPG from the Internet INT. Furthermore, it is also possible to obtain and record programs broadcast on the Web from the Internet INT.
(4) Where necessary, it is also possible to let the mobile server 5 of the present embodiment have further functions for altering, erasing, and adding reservations, for example. Additionally, it is also possible that the mobile server 5 has a function for enabling users to confirm the reservations of their own and completion of recording of the reserved programs, for example.
(5) In the present embodiment, the transmission and reception of data was carried out after a channel was established between the mobile server 5 and the portable terminal 7, however, it is also possible to use a packet communications format. In packet communications, charges are made based on the amount of data, thus the usage fee can be reduced. Since the mobile server 5 is provided on the Internet INT, users can use an electronic device which can access the Internet INT so as to connect to the mobile server 5 via the Internet INT and exchange data using HTTP (Hypertext Transfer Protocol), for example.
(6) In the present embodiment, programs are reproduced on the portable terminal 7 while there is a connection between the mobile server 5 has a connection with the portable terminal 7. However it is also possible to download the program completely onto the portable terminal 7, close the channel, and then reproduce that program with a predetermined reproduction command from the user.

In the present embodiment, duplicate programs are not recorded in the recording DB *ds,* however, it is also possible make duplicate recordings, in which case a plurality of the same program will exist in the recording DB *ds.*

### 5. Other Embodiments of the Invention

As described in the above embodiments, the mobile server 5 receives the mobile broadcast MB, converts it into data for the portable terminals, and forwards the data to those terminals. However, it is also possible for the mobile server 5 to receive the general broadcast GB and forward it in the same way to the portable terminals. In this case, the mobile server 5 for example performs data conversion from MPEG2, which is for the general broadcast GB, to MPEG4, which is for the mobile broadcast MB.

Additionally, in the above embodiments a case was described in which the mobile server 5 receives a digital satellite broadcast, however, it is also possible that the mobile server 5 receives terrestrial digital broadcasts. In this case, a parabolic antenna is not necessary. Since transmission of terrestrial digital broadcasts are limited within certain areas in which they can be received, it is often the case that broadcasts which can be received in Tokyo district cannot necessarily be received in Kyushu district. However, in the above embodiments, the communications data is forwarded by communication via the mobile communications network 6. Therefore, a user is able to view a program broadcast within an area which the portable terminal is not located by accessing a mobile server 5 provided in the area. Specifically, a user in Kyusyu district accesses a mobile server 5 in Tokyo district to view programs which is broadcast only in Tokyo district. Besides, a user accesses a mobile server 5 in Japan from overseas, to view domestic broadcasts, for example. Additionally, the broadcast does not have to be a digital broadcast as long as it is a mobile broadcast MB.

The portable terminal of the above embodiments can be any kind of terminal as long as it can carry out communication with the mobile server 5. For example, it can be a portable telephone, an automobile telephone, or a PDA (personal digital assistant), as long as it is a terminal that can be accommodated on a mobile communications network.

## Claims

1. A data forwarding method comprising:
a step in which a broadcasting station sends data intended for a mobile terminal accommodated on a mobile communications network;
a step in which a mobile server accommodated on the mobile communications network receives the sent data; and
a step in which the mobile server forwards the received data to the mobile terminal via the mobile communications network.

2. The data forwarding method according to claim 1, wherein after converting the data received from the broadcasting station into a data format which can be reproduced by the mobile terminal, the mobile server forwards the converted data to the mobile terminal.

3. A data forwarding method comprising:
a step in which a broadcasting station sends a two-way program;
a step in which a mobile server accommodated on a mobile communication network receives the sent two-way program;
a step in which the mobile server forwards the received two-way program to a mobile terminal accommodated on the mobile communications network via the mobile communications network;
a step in which the mobile terminal receives the forwarded two-way program and via the mobile communications network sends a reaction of a user of the mobile terminal regarding the received two-way program to a two-way server, wherein the two-way server is provided between the broadcasting station and the mobile terminal, performs two-way communication with the broadcasting station, and is accommodated on the mobile communications network; and
a step in which the two-way server receives the reaction of the user and sends the reaction to the broadcasting station.

4. The data forwarding method according to claim 3, wherein after converting the received two-way program into a data format reproducible by the mobile terminal, the mobile server forwards the converted data to that mobile terminal.

5. A data forwarding method comprising:
a step in which a broadcasting station sends program selection information that is used when a user of a mobile terminal selects a broadcast program;
a step in which a mobile server accommodated on a mobile communications network receives the sent program selection information, and forwards the received program selection information to the mobile terminal via the mobile communications network;
a step in which the mobile terminal receives the forwarded program selection information, and sends a program record command, which requests that a program selected by a user of the mobile terminal based on the received program selection information is recorded, to a home server installed within a home or the like, and provided with a function for recording the broadcast program; and
a step in which the home server receives the program record command, receives the selected program from the broadcasting station, and records the selected program.

6. The data forwarding method according to claim 5, wherein the mobile server creates a program guide, which can be reproduced by the mobile terminal, based on the received program selection information, and forwards the created program guide to the mobile terminal via the mobile communications network.

7. A data forwarding method comprising:
a step in which a broadcasting station sends a program intended for a mobile terminal accommodated on a mobile communications network;
a step in which the mobile terminal accommodated on the mobile communications network sends a signal, requesting that the program is recorded, via the mobile communications network to a mobile server accommodated on the mobile communications network;
a step in which the mobile server receives the request, and receives and records the reserved program from the broadcasting station; and
a step in which the mobile server, in response to a program reproduction request from the mobile terminal which made the record request for the recorded program, forwards the recorded program to that mobile terminal via the mobile communications network.

8. The data forwarding method according to claim 7, wherein after converting the recorded program into a data format which can be reproduced by the mobile terminal, the mobile server forwards the converted data to the mobile terminal.

9. A mobile server which:
receives data intended for a mobile terminal broadcast by a broadcasting station; and
sends the received data to a mobile terminal accommodated on a mobile communications network via the mobile communications network.

10. The mobile server according to claim 9, wherein after converting the received data into a data format which can be reproduced by the mobile terminal, the mobile server forwards the converted data to the mobile terminal.
